# FASCICULE DE BREVET EUROPEEN

(11) **EP 4 331 876 B1**
(45) Date de publication et mention de la délivrance du brevet: **27.08.2025**
(21) Numéro de dépôt: 23194010.7
(22) Date de dépôt: 29.08.2023
(51) Int. Cl.: B60H 1/00, B64D 13/06, B61D 27/00, B60H 1/24, B61D 17/04, B61D 37/00

(54) **INSTALLATION DE CLIMATISATION POUR VÉHICULE COMPRENANT DES SYSTÈMES DE SOUFFLAGE DIRIGÉS VERS UN PLANCHER**
FAHRZEUGKLIMAANLAGE MIT BODENSEITIG GERICHTETEN BLASSYSTEMEN
AIR CONDITIONING SYSTEM FOR A VEHICLE COMPRISING BLOWING SYSTEMS DIRECTED TOWARDS A FLOOR

(30) Priorité: 30.08.2022 FR 2208667
(43) Date de publication de la demande: 06.03.2024
(73) Titulaire: SpeedInnov, 75008 Paris (FR)
(72) Inventeur: LANOE, Stéphane, 17000 LA ROCHELLE (FR); LOUMEAUD, Arnaud, 17430 TONNAY CHARENTE (FR)
(74) Mandataire: Plasseraud IP

(56) Documents cités:
- FR-A1- 2 632 593
- FR-A1- 2 830 503
- JP-A- S63 222 916
- KR-A- 20090 061 132

## Description

La présente invention concerne une installation de climatisation pour véhicule, notamment ferroviaire, adaptée pour délivrer une pluralité de flux d'air conditionné montant le long d'une portion d'une paroi latérale du véhicule, l'installation de climatisation comprenant :
- une gaine s'étendant dans une direction longitudinale du véhicule et destinée à être fixée sur la paroi latérale sous ladite portion, la gaine définissant un passage intérieur longitudinal pour un flux principal d'air conditionné, et
- des organes de soufflage définissant respectivement des passages pour la pluralité de flux d'air conditionné, les passages formant des dérivations du passage intérieur, chacun des organes de soufflage étant adapté pour diriger l'un des flux d'air conditionné vers ladite portion de la paroi latérale.

L'invention concerne également un véhicule comprenant au moins une telle installation de climatisation.

Le véhicule est par exemple une voiture bar d'une rame de train à grande vitesse ou d'un train intercité.

Afin de climatiser un tel véhicule, il est connu d'utiliser une installation de climatisation dans laquelle la gaine apporte un flux d'air principal. La gaine est implantée au ras du plancher et réalise un soufflage direct horizontalement vers le plancher. Des conduits verticaux permettent de souffler des flux d'air sous la ou les baies vitrées. Un système d'induction, c'est-à-dire une prise d'air aspirant de l'air à la base des conduits par effet Venturi, permet de donner aux flux d'air conditionné les vitesses requises sous la ou les baies vitrées.

Toutefois, une telle installation de climatisation est complexe et difficile à régler en termes d'équilibrage des débits d'air, notamment en raison de la présence du système d'induction. En outre, elle s'intègre mal dans un véhicule tel qu'une voiture bar, car la gaine, qui présente un volume assez important, encombre l'espace situé à la jonction de la paroi latérale et du plancher. En général, elle forme une espèce de marche susceptible de gêner des passagers qui se tiendraient par exemple devant une baie vitrée.

Pour pallier ces inconvénients, il a été imaginé de fixer la gaine un peu plus en hauteur, sous la ou les baies vitrées, et de ne souffler de l'air conditionné que vers le haut le long des baies vitrées. Néanmoins, cela ne permet pas d'obtenir une température correcte dans tout le véhicule. Il a alors été envisagé de recourir à un plancher chauffant, c'est-à-dire pourvu de résistances électriques.

Malheureusement, une telle solution entraine des surcoûts du plancher et/ou des problèmes de fiabilité et de maintenance liés à la présence de résistances électriques chauffantes.

Selon son abrégé, le document FR 2 830 503 A1 décrit une installation de distribution d'air conditionné dans une salle de voyageurs d'un véhicule ferroviaire, comprenant un conduit s'étendant en partie inférieure d'une paroi latérale de la salle, ce conduit comportant sur sa face latérale adjacente à l'intérieur de la salle des moyens de sortie d'air aménagés sur toute la longueur du conduit et conçus de manière à libérer un flux d'air longeant le plancher du véhicule, le conduit comportant dans sa partie supérieure des ouvertures débouchant dans un espace débouchant à sa partie supérieure à l'intérieur de la salle.

Un but de l'invention est de fournir une installation de climatisation adaptée à un véhicule tel qu'une voiture bar, fonctionnant correctement et présentant un coût compétitif.

À cet effet, l'invention a pour objet une installation de climatisation selon la revendication 1.

Selon des modes de réalisation particuliers, l'installation de climatisation comprend l'une ou plusieurs des caractéristiques correspondant au revendications 2 à 9.

L'invention concerne également un véhicule selon la revendication 10.

L'invention sera mieux comprise à la lecture de la description qui va suivre, donnée uniquement à titre d'exemple et faite en se référant aux dessins annexés, sur lesquels :
- la figure 1 est une vue schématique, en perspective, de l'intérieur d'un véhicule selon l'invention, et
- la figure 2 est une vue schématique, en coupe, selon un plan perpendiculaire à la direction longitudinale, d'une partie du véhicule représenté sur la figure 1, la figure 2 montrant en outre un équipement intérieur optionnel non représenté sur la figure 1.

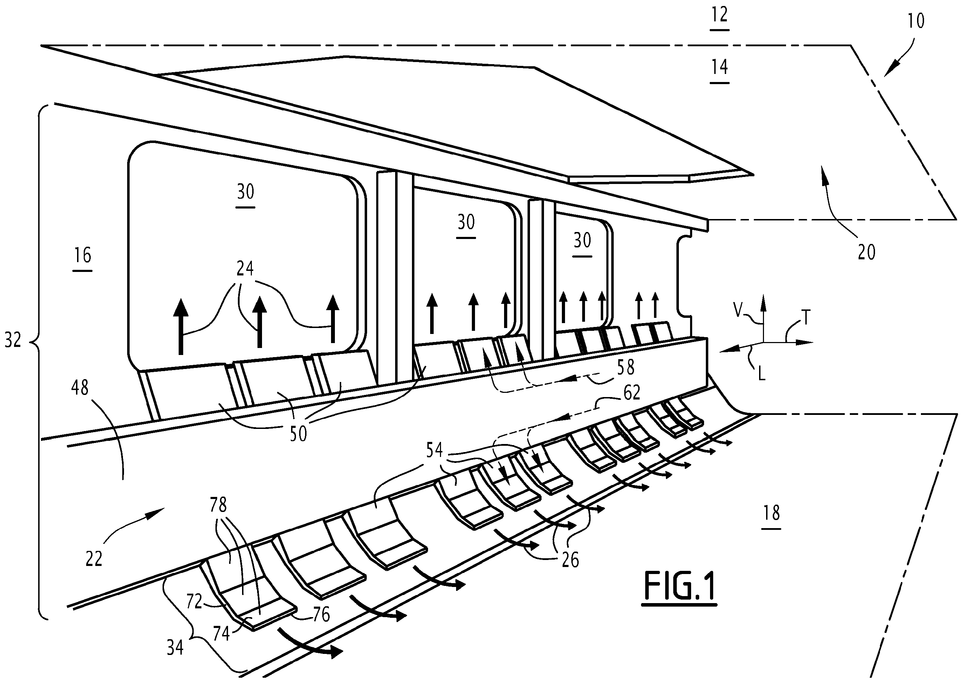

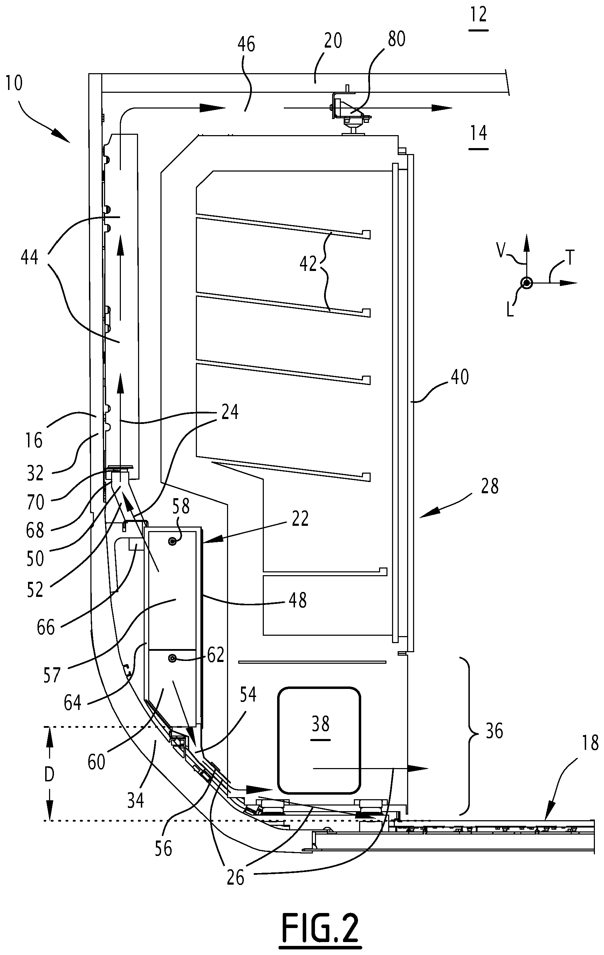

En référence aux figures 1 et 2, on décrit un véhicule 10 (représenté partiellement) selon l'invention.

Le véhicule 10 est avantageusement un véhicule ferroviaire, par exemple une voiture bar d'une rame de train à grande vitesse, d'un train intercité ou d'un train régional.

En variante, le véhicule 10 est un véhicule routier, tel qu'un bus, une plateforme navale ou un aéronef.

Le véhicule 10 comprend par exemple un niveau haut 12 et un niveau bas 14 pour des passagers (non représentés).

Le véhicule 10 comprend une paroi latérale 16 comprenant au moins une baie vitrée 30, un plancher 18, et dans l'exemple un plafond 20 situé entre le niveau haut 12 et le niveau bas 14. Le véhicule 10 comprend une installation de climatisation 22 adaptée pour délivrer une première pluralité 24 de flux d'air conditionné montant le long de la paroi latérale 16, et une deuxième pluralité 26 de flux d'air conditionné dirigés vers le plancher 18 pour le chauffer.

Optionnellement, comme représenté sur la figure 2, le véhicule 10 comprend un équipement intérieur 28, par exemple une vitrine frigorifique, situé devant la paroi latérale 16 pour un passager du véhicule.

La paroi latérale 16 s'étend dans l'exemple entre le plancher 18 et le plafond 20. Dans l'exemple, la paroi latérale 16 fait face à une autre paroi latérale (non représentée) du véhicule 10 dans une direction transversale T destinée à être horizontale lorsque le véhicule avance sur un terrain horizontal. Dans l'exemple, la paroi latérale 16 comprend des baies vitrées 30 successives dans une direction longitudinale L du véhicule 10 perpendiculaire à la direction transversale T et destinée à être horizontale lorsque le véhicule avance sur un terrain lui-même horizontal.

La paroi latérale 16 comprend par exemple une partie supérieure 32 sensiblement verticale lorsque le véhicule avance sur un terrain horizontal, et une partie inférieure 34 incurvée ou inclinée formant une transition entre la partie supérieure 32 et le plancher 18.

La partie supérieure 32 inclut les baies vitrées 30.

Sur la figure 1, les baies vitrées 30 sont au nombre de trois.

Selon des variantes, les baies vitrées 30 sont plus de trois, moins de trois, ou bien même une seule.

Au moins l'une des baies vitrées 30 est adaptée pour recevoir au moins l'un des flux d'air conditionné de la première pluralité 24. Dans l'exemple, chacune des baies vitrées 30 reçoit plusieurs des flux d'air conditionné de la première pluralité 24, par exemple trois de ces flux.

Le plancher 18 est avantageusement dépourvu de tout système de chauffage interne, notamment de résistances électriques.

L'équipement intérieur 28 est destiné à être utilisé par un passager du véhicule 10. L'équipement intérieur 28 comprend une partie inférieure 36 comportant un moteur 38 propre à dégager de la chaleur. L'équipement intérieur 28 comprend par exemple une porte 40 donnant avantageusement accès à des étagères 42, par exemple destinées à recevoir des produits alimentaires (non représentés).

L'équipement intérieur 28 définit par exemple un passage 44 avec la paroi latérale 16, et un passage 46 avec le plafond 20.

L'installation de climatisation 22 comprend une gaine 48 s'étendant dans la direction longitudinale L et fixée sur la paroi latérale 16 sous les bais vitrées 30. L'installation de climatisation comprend une pluralité d'organes de soufflage 50 définissant respectivement des passages 52 pour la première pluralité 24 de flux d'air conditionné, et une pluralité de systèmes de soufflage 54 définissant respectivement des passages 56 pour la deuxième pluralité 26 de flux d'air conditionné.

L'installation de climatisation 22 est avantageusement dépourvue de toute prise d'air à effet Venturi en aval de la gaine 48.

La gaine 48 est avantageusement séparée du plancher 18 par une distance D selon une direction d'élévation V perpendiculaire à la direction longitudinale L et à la direction transversale T.

La gaine 48 définit un premier passage intérieur 57 longitudinal pour un premier flux principal d'air conditionné 58, et un deuxième passage intérieur 60 longitudinal pour un deuxième flux principal d'air conditionné 62.

Avantageusement, la gaine 48 présente, en coupe perpendiculairement à la direction longitudinale L (c'est-à-dire dans le plan de la figure 2), une forme allongée selon la direction d'élévation V, le premier passage intérieur 56 étant par exemple situé au-dessus du deuxième passage intérieur 60.

La gaine 48 comprend une face 64 tournée vers la paroi latérale 16.

La distance D est par exemple comprise entre 25 et 120 cm.

Les passages 52 forment des dérivations du premier passage intérieur 57, chacun des organes de soufflage 50 étant adapté pour diriger l'un des flux d'air conditionné de la première pluralité 24 vers la paroi latérale 16.

Chacun des organes de soufflage 50 comporte par exemple une première partie 66 fixée sur la face 64 pour admettre l'un des flux d'air conditionné de la première pluralité 24, et une deuxième partie 68 formant un bec s'étendant vers le haut à partir de la première partie dans la direction d'élévation V.

Le bec est avantageusement incliné vers la paroi latérale 16 par rapport à la direction d'élévation V. Le bec est avantageusement aplati et définit une sortie 70, éventuellement grillagée, pour l'un des flux d'air conditionné de la première pluralité 24, la sortie présentant une forme allongée dans la direction longitudinale L.

Les passages 56 forment des dérivations du deuxième passage intérieur 60, chacun des systèmes de soufflage 54 étant adapté pour diriger l'un des flux d'air conditionné de la deuxième pluralité 26 vers le plancher 18.

Chacun des systèmes de soufflage 54 comprend avantageusement une partie 72 incurvée autour de la direction longitudinale L et adaptée pour que l'un des flux d'air conditionné de la deuxième pluralité 26 présente, en sortie de la partie, une incidence avec le plancher 18 plus faible qu'en entrée de la partie.

Chacun des systèmes de soufflage 54 comprend par exemple une partie terminale 74 formant un bec s'étendant dans la direction transversale T, le bec étant incliné vers le plancher 18 par rapport à la direction transversale. Le bec formé par la partie terminale 74 est avantageusement aplati et définit une sortie 76 (figure 1) pour l'un des flux d'air conditionné de la deuxième pluralité 26, la sortie présentant avantageusement une forme allongée dans la direction longitudinale L.

La partie 72 incurvée comprend par exemple des pans successifs 78 inclinés les uns par rapport aux autres autour de la direction longitudinale L.

Avantageusement, lorsque l'équipement intérieur 28 est présent, au moins l'un des systèmes de soufflage 54 est adapté pour que l'un des flux d'air conditionné de la deuxième pluralité 26 traverse la partie inférieure 36 et reçoive une partie de la chaleur dégagée par le moteur 38.

Avantageusement, une grille 80 est disposée entre l'équipement intérieur 28 et le plafond 20 en travers du conduit 46.

Le fonctionnement de l'installation de climatisation 22 découle de sa structure et va maintenant être brièvement décrit.

Le premier flux principal d'air conditionné 58 emprunte le premier passage intérieur 57 de la gaine 48. Le premier flux principal d'air conditionné 58 se divise pour emprunter chacun des organes de soufflage 50 en formant les flux d'air conditionné de la première pluralité 24.

Les flux d'air conditionné de la première pluralité 24 sont dirigés vers la paroi latérale 16 par les organes de soufflage 50 et montent le long de la paroi latérale.

En cas de présence de l'équipement intérieur 28, au moins certains des flux d'air conditionné de la première pluralité 24 empruntent les conduits 44 et 46, traversent la grille 80, et débouchent dans le niveau bas 14 le long du plafond 20.

Le deuxième flux principal d'air conditionné 62 emprunte le deuxième passage intérieur 60 de la gaine 48, puis se divise pour emprunter chacun des systèmes de soufflage 54 en formant la deuxième pluralité 26 de flux d'air conditionné. Les systèmes de soufflage 54 dirigent les flux d'air conditionné de la deuxième pluralité 26 vers le plancher 18, ce qui chauffe le plancher 18 sur au moins une partie de son extension. Eventuellement, une autre partie (non-représentée) de l'installation de climatisation 22, par exemple fixée sur une autre paroi latérale du véhicule 10, chauffe une autre portion du plancher 18.

Avantageusement, en cas de présence de l'équipement intérieur 28, au moins un des flux d'air conditionné de la deuxième pluralité 26 bénéficie de la chaleur dégagée par le moteur 38.

Grâce aux caractéristiques décrites ci-dessus, l'installation de climatisation 22 est adaptée au véhicule 10, et fonctionne correctement car elle est adaptée pour chauffer le plancher 18. En outre, elle présente un coût compétitif. En effet, les coûts de maintenance du plancher 18 sont réduits.

Optionnellement, grâce à sa forme allongée, la gaine 48 est particulièrement ergonomique. La gaine 48 peut être fixée à la distance D du plancher 18 et empiète peu sur l'espace réservé aux passagers.

Grâce au premier passage intérieur 57 et au deuxième passage intérieur 60, il est possible de régler facilement le ratio de débit du premier flux principal d'air conditionné 58 par rapport au deuxième flux principal d'air conditionné 62, sans recourir à un système complexe d'induction, et de façon sélective selon le type de climatisation souhaité.

Grâce à leur forme, les systèmes de soufflage 54 dirigent efficacement la deuxième pluralité 26 de flux d'air conditionné vers le plancher 18, et permettent d'obtenir le chauffage souhaité.

Les systèmes de soufflage 54, grâce à leur forme incurvée optionnelle, s'adaptent avantageusement à la partie inférieure 34 de la paroi latérale 16.

Enfin, avantageusement, les organes de soufflage 50 et les systèmes de soufflages 54 sont adaptables individuellement pour régler les débits des flux d'air conditionné de la première pluralité 24 et de la deuxième pluralité 24 les uns par rapport aux autres.

## Revendications

1. Installation de climatisation (22) pour véhicule (10), adaptée pour délivrer, lorsque l'installation de climatisation (22) est montée dans un véhicule (10) comprenant un plancher (18), et une paroi latérale (16) comprenant au moins une baie vitrée (30) :
- une première pluralité (24) de flux d'air conditionné, chacun des flux de la première pluralité (24) montant le long de la paroi latérale (16), et au moins certains des flux de la première pluralité (24) montant le long de la baie vitrée (30), et
- une deuxième pluralité (26) de flux d'air conditionné dirigés vers le plancher (18) pour chauffer le plancher (18),
l'installation de climatisation (22) comprenant :
- une gaine (48) s'étendant dans une direction longitudinale (L) du véhicule (10) et destinée à être fixée sur la paroi latérale (16) sous la baie vitrée (30),
- une pluralité d'organes de soufflage (50) définissant respectivement des passages (52) pour la première pluralité (24) de flux d'air conditionné, chacun des organes de soufflage (50) étant adapté pour diriger l'un des flux d'air conditionné de la première pluralité (24) vers la paroi latérale (16), et
- une pluralité de systèmes de soufflage (54) définissant respectivement des passages (56) pour la deuxième pluralité (26) de flux d'air conditionné, chacun des systèmes de soufflage (54) étant adapté pour diriger l'un des flux d'air conditionné de la deuxième pluralité (26) vers le plancher (18),
**caractérisée en ce que** :
- la gaine (48) définit un premier passage intérieur (57) longitudinal pour un premier flux principal d'air conditionné (58), et un deuxième passage intérieur (60) longitudinal pour un deuxième flux principal d'air conditionné (62),
- les passages (52) pour la première pluralité (24) de flux d'air conditionné forment des dérivations du premier passage intérieur (57), et
- les passages (56) pour la deuxième pluralité (26) de flux d'air conditionné forment des dérivations du deuxième passage intérieur (60).

2. Installation de climatisation (22) selon la revendication 1, dans laquelle la gaine (48) présente, en coupe perpendiculairement à la direction longitudinale (L), une forme allongée selon une direction d'élévation (V) destinée à être verticale lorsque le véhicule (10) avance sur un terrain horizontal, le premier passage intérieur (57) étant situé au-dessus du deuxième passage intérieur (60).

3. Installation de climatisation (22) selon la revendication 1 ou 2, dans laquelle la gaine (48) comprend une face (64) tournée vers la paroi latérale (16), chacun des organes de soufflage (50) comportant une première partie (66) fixée sur ladite face (64) pour admettre l'un des flux d'air conditionné de la première pluralité (24), et une deuxième partie (68) formant un bec s'étendant vers le haut à partir de la première partie (66) dans une direction d'élévation (V) destinée à être verticale lorsque le véhicule (10) avance sur un terrain horizontal, le bec étant incliné vers la paroi latérale (16) par rapport à la direction d'élévation (V).

4. Installation de climatisation (22) selon la revendication 3, dans laquelle le bec est aplati et définit une sortie (70) pour l'un des flux d'air conditionné de la première pluralité (24), la sortie (70) présentant une forme allongée dans la direction longitudinale (L).

5. Installation de climatisation (22) selon l'une quelconque des revendications 1 à 4, dans laquelle chacun des systèmes de soufflage (54) comprend une partie (72) incurvée autour de la direction longitudinale (L) et adaptée pour que l'un des flux d'air conditionné de la deuxième pluralité (26) présente, en sortie (76) de la partie (72) incurvée, une incidence avec le plancher (18) plus faible qu'en entrée de la partie (72) incurvée.

6. Installation de climatisation (22) selon la revendication 5, dans laquelle la partie (72) incurvée comprend des pans successifs (78) inclinés les uns par rapport aux autres autour de la direction longitudinale (L).

7. Installation de climatisation (22) selon l'une quelconque des revendications 1 à 6, dans laquelle chacun des systèmes de soufflage (54) comprend une partie terminale (74) formant un bec s'étendant dans une direction transversale (T) du véhicule (10) perpendiculaire à la direction longitudinale (L), le bec étant incliné vers le plancher (18) par rapport à la direction transversale (T).

8. Installation de climatisation (22) selon la revendication 7, dans laquelle le bec formé par la partie terminale (74) est aplati et définit une sortie (76) pour l'un des flux d'air conditionné de la deuxième pluralité (26), la sortie (76) présentant une forme allongée dans la direction longitudinale (L).

9. Installation de climatisation (22) selon l'une quelconque des revendications 1 à 8, comprenant en outre au moins un équipement intérieur (28) destiné à être utilisé par un passager du véhicule (10), l'équipement intérieur (28) étant destiné à être situé devant la paroi latérale (16) pour le passager et comprenant une partie inférieure (36) comportant un moteur (38) propre à dégager de la chaleur, au moins l'un des systèmes de soufflage (54) étant adapté pour qu'au moins l'un des flux d'air conditionné de la deuxième pluralité (26) traverse la partie inférieure (36) et reçoive une partie de la chaleur dégagée par le moteur (38).

10. Véhicule (10), notamment ferroviaire, comprenant :
- une paroi latérale (16) comprenant au moins une baie vitrée (30) et un plancher (18).
- au moins une installation de climatisation (22) selon l'une quelconque des revendications 1 à 9, la gaine (48) étant fixée sur la paroi latérale (16) sous la baie vitrée (30).

## Patentansprüche

1. Klimaanlage (22) für ein Fahrzeug (10), die dazu ausgelegt ist dann, wenn die Klimaanlage (22) in einem Fahrzeug (10) mit einem Boden (18) und einer Seitenwand (16) mit wenigstens einer Fensterfläche (30) eingebaut ist, Folgendes zu liefern:
- eine erste Mehrzahl (24) von klimatisierten Luftströmen, wobei jeder der Ströme der ersten Mehrzahl (24) entlang der Seitenwand (16) aufsteigt und wenigstens einige der Ströme der ersten Mehrzahl (24) entlang der Fensterfläche (30) aufsteigen, und
- eine zweite Mehrzahl (26) von klimatisierten Luftströmen, die zum Boden (18) gerichtet sind, um den Boden (18) zu beheizen,
wobei die Klimaanlage (22) umfasst:
- einen Kanal (48), der sich in Längsrichtung (L) des Fahrzeugs (10) erstreckt und dazu bestimmt ist, an der Seitenwand (16) unterhalb der Fensterfront (30) befestigt zu werden,
- eine Mehrzahl von Gebläseelementen (50), die jeweils Durchgänge (52) für die erste Mehrzahl (24) von klimatisierten Luftströmen bilden, wobei jedes der Gebläseelemente (50) dazu ausgelegt ist, einen der klimatisierten Luftströme der ersten Mehrzahl (24) zur Seitenwand (16) zu leiten, und
- eine Mehrzahl von Gebläsesystemen (54), die jeweils Durchgänge (56) für die zweite Mehrzahl (26) von klimatisierten Luftströmen definieren, wobei jedes der Gebläsesysteme (54) dazu ausgelegt ist, einen der klimatisierten Luftströme der zweiten Mehrzahl (26) zum Boden (18) zu leiten,
**dadurch gekennzeichnet, dass**:
- der Kanal (48) einen ersten inneren Längsdurchlass (57) für einen ersten Hauptstrom klimatisierter Luft (58) und einen zweiten inneren Längsdurchlass (60) für einen zweiten Hauptstrom klimatisierter Luft (62) definiert,
- die Durchlässe (52) für die erste Mehrzahl (24) von klimatisierten Luftströmen Abzweigungen des ersten inneren Durchlasses (57) bilden, und
- die Durchlässe (56) für die zweite Mehrzahl (26) von klimatisierten Luftströmen Abzweigungen des zweiten inneren Durchlasses (60) bilden.

2. Klimaanlage (22) nach Anspruch 1, wobei der Kanal (48) im Querschnitt senkrecht zur Längsrichtung (L) eine längliche Form in einer Höhenrichtung (V) aufweist, die bei Vorwärtsfahrt des Fahrzeugs (10) auf horizontalem Gelände vertikal ist, wobei der erste Innenkanal (57) über dem zweiten Innenkanal (60) angeordnet ist.

3. Klimaanlage (22) nach Anspruch 1 oder 2, wobei der Kanal (48) eine zur Seitenwand (16) gerichtete Fläche (64) aufweist, wobei jedes der Gebläseelemente (50) einen ersten Teil (66) aufweist, der an der genannten Fläche (64) befestigt ist, um einen der klimatisierten Luftströme der ersten Mehrzahl (24) aufzunehmen, und einen zweiten Teil (68) aufweist, der eine Düse bildet, die sich von dem ersten Teil (66) in einer Aufwärtsrichtung (V) erstreckt, die senkrecht ist, wenn das Fahrzeug (10) auf horizontalem Gelände fährt, wobei die Düse in Bezug auf die Aufwärtsrichtung (V) zur Seitenwand (16) geneigt ist.

4. Klimaanlage (22) nach Anspruch 3, wobei die Düse abgeflacht ist und einen Auslass (70) für einen der klimatisierter Luftströme der ersten Mehrzahl (24) bildet, wobei der Auslass (70) in Längsrichtung (L) eine längliche Form aufweist.

5. Klimaanlage (22) nach einem der Ansprüche 1 bis 4, wobei jedes der Gebläsesysteme (54) einen um die Längsrichtung (L) gekrümmten Abschnitt (72) aufweist, der dazu ausgelegt ist, dass einer der klimatisierten Luftströme der zweiten Mehrzahl (26) am Ausgang (76) des gekrümmten Teils (72) einen geringeren Anstellwinkel zum Boden (18) aufweist als am Eingang des gekrümmten Teils (72).

6. Klimaanlage (22) nach Anspruch 5, wobei der gekrümmte Teil (72) aufeinanderfolgende Abschnitte (78) umfasst, die um die Längsrichtung (L) zueinander geneigt sind.

7. Klimaanlage (22) nach einem der Ansprüche 1 bis 6, wobei jedes der Gebläsesysteme (54) einen Endabschnitt (74) aufweist, der eine sich in einer Querrichtung (T) des Fahrzeugs (10) senkrecht zur Längsrichtung (L) erstreckende Düse bildet, wobei die Düse in Bezug auf die Querrichtung (T) zum Boden (18) geneigt ist.

8. Klimaanlage (22) nach Anspruch 7, wobei die durch den Endabschnitt (74) gebildete Düse abgeflacht ist und einen Auslass (76) für einen der klimatisierten Luftströme der zweiten Mehrzahl (26) definiert, wobei der Auslass (76) in Längsrichtung (L) eine längliche Form aufweist.

9. Klimaanlage (22) nach einem der Ansprüche 1 bis 8, welche ferner wenigstens eine Innenausstattung (28) umfasst, die für die Nutzung durch einen Passagiers des Fahrzeugs (10) vorgesehen ist, wobei die Innenausstattung (28) dazu bestimmt ist, vor der Seitenwand (16) für den Passagier angeordnet zu werden, und einen unteren Teil (36) mit einem Motor (38) umfasst, der Wärme abgeben kann, wobei wenigstens eines der Gebläsesysteme (54) derart ausgelegt ist, dass wenigstens einer der Klimatisierungsluftströme der zweiten Mehrzahl (26) durch den unteren Teil (36) strömen kann und einen Teil der vom Motor (38) abgegebenen Wärme aufnehmen kann.

10. Fahrzeug (10), insbesondere Schienenfahrzeug, umfassend:
- eine Seitenwand (16) mit wenigstens einer Fensterfläche (30) und einem Boden (18):
- wenigstens eine Klimaanlage (22) nach einem der Ansprüche 1 bis 9, wobei der Kanal (48) an der Seitenwand (16) unterhalb der Fensterfläche (30) befestigt ist.

## Claims

1. Air conditioning system (22) for vehicles (10), adapted to deliver, when the air conditioning system (22) is mounted in a vehicle (10) comprising a floor (18), and a side wall (16) comprising at least one glass pane (30):
- a first plurality (24) of conditioned air flows, each of the flows of the first plurality (24) rising along the side wall (16), and at least some of the flows of the first plurality (24) rising along the glass pane (30), and
- a second plurality (26) of air-conditioned air flows directed towards the floor (18) to heat the floor (18),
the air conditioning installation (22) comprising:
- a duct (48) extending in a longitudinal direction (L) of the vehicle (10) and intended to be affixed to the side wall (16) under the glass pane (30),
- a plurality of air flow members (50) respectively defining passages (52) for the first plurality (24) of conditioned air flows, each of the air flow members (50) being adapted to direct one of the conditioned air flows of the first plurality (24) towards the side wall (16), and
- a plurality of air flow systems (54) respectively defining passages (56) for the second plurality (26) of conditioned air flows, each of the air flow systems (54) being adapted to direct one of the conditioned air flows of the second plurality (26) towards the floor (18),
**characterised in that**:
- the duct (48) defines a first longitudinal inner passage (57) for a first main conditioned air flow (58), and a second longitudinal inner passage (60) for a second main conditioned air flow (62),
- the passages (52) for the first plurality (24) of conditioned air flows form branches of the first inner passage (57), and
- the passages (56) for the second plurality (26) of air-conditioned flows form branches of the second inner passage (60).

2. Air conditioning installation (22) according to claim 1, wherein the duct (48) present, in cross-section perpendicular to the longitudinal direction (L), an elongated shape according to an elevation direction (V) intended to be vertical when the vehicle (10) is moving forward on an horizontal ground, the first inner passage (57) being located above the second inner passage (60).

3. Air conditioning installation (22) according to claim 1 or 2, wherein the duct (48) comprises a face (64) facing the side wall (16), each of the air flow members (50) comprising a first portion (66) affixed to said face (64) in order to admit one of the conditioned air flows of the first plurality (24), and a second portion (68) forming a spout extending upwards from the first portion (66) in an elevation direction (V) intended to be vertical when the vehicle (10) is moving forward on horizontal ground, the spout being inclined towards the side wall (16) with respect to the direction of elevation (V).

4. Air conditioning installation (22) according to claim 3, wherein the spout is flattened and defines an outlet (70) for one of the conditioned air flows of the first plurality (24), the outlet (70) having an elongated shape in the longitudinal direction (L).

5. Air conditioning installation (22) according to any one of claims 1 to 4, wherein each of the air flow systems (54) comprises a portion (72) curved about the longitudinal direction (L) and adapted so that one of the conditioned air flows of the second plurality (26) has, at the outlet (76) of the curved portion (72), a lower incidence with the floor (18) than at the inlet of the curved portion (72).

6. Air conditioning installation (22) according to claim 5, wherein the curved portion (72) comprises successive sections (78) inclined relative to each other about the longitudinal direction (L).

7. Air conditioning installation (22) according to any one of claims 1 to 6, wherein each of the air flow systems (54) comprises an end portion (74) forming a spout extending in a transverse direction (T) of the vehicle (10) perpendicular to the longitudinal direction (L), the spout being inclined towards the floor (18) with respect to the transverse direction (T).

8. Air conditioning installation (22) according to claim 7, wherein the spout formed by the end portion (74) is flattened and defines an outlet (76) for one of the conditioned air flows of the second plurality (26), the outlet (76) having an elongated shape in the longitudinal direction (L).

9. Air conditioning system (22) according to any one of claims 1 to 8, further comprising at least one interior equipment (28) intended to be used by a passenger of the vehicle (10), the interior equipment (28) being intended to be located in front of the side wall (16) for the passenger and comprising a lower portion (36) comprising a motor (38) capable of emitting heat, at least one of the air flow systems (54) being adapted such that at least one of the conditioned air flows of the second plurality (26) pass through the lower portion (36) and receive part of the heat released by the motor (38).

10. A vehicle (10), in particular railway, comprising:
- a side wall (16) comprising at least one glass pane (30) and a floor (18),
- at least one air conditioning installation (22) according to any one of claims 1 to 9, the duct (48) being fastened to the side wall (16) under the glass pane (30).
